Europäisches Patentamt

(19) **European Patent Office**

Office européen des brevets

(11) Publication number: **0 205 318**
**A2**

(12) # EUROPEAN PATENT APPLICATION

(21) Application number: **86304310.5**

(22) Date of filing: **05.06.86**

(51) Int. Cl.⁴: **B 26 F 1/38**

(30) Priority: **07.06.85 GB 8514497**

(43) Date of publication of application:
**17.12.86 Bulletin 86/51**

(84) Designated Contracting States:
**AT BE CH DE FR IT LI LU NL SE**

(71) Applicant: **Magnetronics Limited**
**Unit A, St. Mary's Mills Evelyn Drive**
**Leicester(GB)**

(72) Inventor: **Meredith, Roger John**
**The Close Ashwell Road**
**Oakham Rutland Leicester(GB)**

(74) Representative: **Jones, Andree Zena et al,**
**E. N. Lewis & Taylor 144 New Walk**
**Leicester LE1 7JA(GB)**

(54) **Improvements in or relating to the cutting of flexible material.**

(57) A method and apparatus are described for use in cutting flexible material, for example cloth, and includes a source roll (26) of material (M), means for drawing a length of material from the source to be laid upon an upwardly facing support surface (32) of a carrier device (28), conveniently a drum, and means to cause relative movement between cutting equipment (T") arranged above the support surface (32) and the material (M) laid on the surface. Thus a cut is made in the material according to a predetermined pattern. The material continues to be cut in a manner described and eventually is removed from the drum (28) by a take-off arrangement (42, 52).

EP 0 205 318 A2

Croydon Printing Company Ltd.

Title: <u>Improvements in or relating to the cutting of</u>
<u>flexible material.</u>

The invention is concerned with improvements in or
relating to the cutting of flexible material in sheet
form, more particularly but not exclusively fabric
provided in a continuous length on a roll.

It is well know to cut sheet material such as fabric by
means of cutting equipment of the kind including laser
means, water jets,reciprocating knives or plasma torch
devices and to control cutting equipment according to
this definition by, for example, computerised
programming, numerical control or copying from a pattern
so that portions of fabric may be cut consistently
according to, say, a tailor's pattern.

In order to achieve this operation it has been
conventional to provide fabric to an operating surface,
conveniently the upper run of a conveyor or a cutting bed
plate or table.  The cutting equipment is arranged to cut
along the desired path by a combination of movement of
the equipment in a transverse direction, for example, on
a gantry which is itself movable with respect to the
operating surface in a longitudinal direction.

The present invention provides a method of cutting flexible material in sheet form comprising drawing a length of material from a source thereof, causing said length to be laid upon an upwardly facing portion of a support surface of a carrier device, said support surface comprising an endless circulatory loop, means to cause relative movement between cutting means arranged generally above said length of material and the surface support so as to enable a cut to be made in the material thereon according to a predetermined pattern, further circulation of the surface being caused to feed the material from the surface in the direction away from the source of the material.

Conventional cutting apparatus provided with 2-axis movement and having a fixed flat bed has several disadvantages such as limitation of cut length or pattern repeat which often reduces the yield of cut parts and wastes material, inability to separate desired cut parts from the off cut or waste, and difficulty in organising the discharge of the cut parts automatically in a controlled manner.

The present invention further provides a method of cutting flexible material in sheet form comprising the steps drawing a length of material from a source thereof, causing said length to be laid upon an upwardly facing portion of a support surface of a carrier device said support surface comprising an endless loop so that the length passes beneath cutting equipment as hereinbefore defined, the cutting equipment being arranged to partake of movement transversely and longitudinally of the length of material, wherein the carrier device is at least substantially stationary whilst the cutting equipment is energised to cut the length of material in a predetermined pattern and wherein when all desired cuts on the length are completed the cutting equipment ceases operation, the carrier device and cutting equipment are moved substantially simultaneously and synchronously so as to draw a second length of material from the source whilst the first cut length of material is removed from the carrier device, the cutting equipment then resuming operation and a further pattern is cut on the second length of material such that the layout of the cuts is compatible with the layout of cuts in the first length of material, the steps being repeated with successive lengths of material as often as required.

Conveniently, the pattern cut on each second or further successive length may differ from the pattern cut on the first or other adjacent length so as to form a coherent series of compatible pattern portions comprising a multi-length module.

Alternatively, each length may be cut in a pattern identical with its adjacent length and each length will thus comprise a separate module.

Preferably the carrier device is a rotatably mounted drum, the continuous loop of the support surface comprising the drum periphery. The surface is preferably provided with so-called 'card-clothing' and the longitudinal movement of the cutting device follows the locus of a part-circular arc concentric with the drum axis.

The invention further provides apparatus for use in the method described above comprising a material feeding source including a roller device rotatable to provide a length or portion of a length of material to a material support surface of the apparatus mounted for movement in a forward or reverse sense in a continuous loop, cutting equipment positioned at a level above the support surface to facilitate a cutting operation upon material and take-off means arranged to allow removal of the cut material from the drum surface.

Preferably the apparatus may further comprise means for separating the waste material from the desired cut material wherein the waste material is removed in one or more continuous lengths.

Advantageously, the apparatus may include means for stacking the cut material into piles of identical parts by arranging the cut parts formed by the method described above on the upper surface of a conveyor arrangement such that each time the carrier device moves forward the said conveyor arrangement moves forward synchronously and collects further cut parts until a complete set of cut parts forming a module or "pattern repeat" is assembled on to a band of the conveyor in a single layer.

In an example to be described below, an end return member of the conveyor arrangement, around which the conveyor band passes, travels in a substantially horizontal path and means are provided for drawing the lower run of the belt in a reverse direction simultaneously with the movement of the return member such that the cut parts fall from upper run of the conveyor band on to a second conveyor band or table, and wherein after a second and further set of cut parts are then stacked on the conveyor band of the first conveyor arrangement to be deposited on the second band or table respectively so as to build piles, each pile comprising identical cut parts.

Preferably, the return member of the first conveyor band of the preceding paragraph may be a bar around which the conveyor band slides and the conveyor band may be perforated or formed of a mesh or net material such that air or gas provided at a pressure greater or less than atmospheric pressure from a source outlet within the return member controls the fall of the cut parts onto the second conveyor. It is envisaged that a combined sequence of reduced and increased pressure may be used to deposit selected cut parts in an inverted condition on the second conveyor band or table. Conveniently, the return member may be provided with one or more air manifolds communicating with arrays of fine air-bleed holes or with sections of porous material.

Further aspects and advantages of the method and apparatus therefor according to the invention will become apparent from the following description which is to be read with reference to the drawing, the description being given by way of example only and not by way of limitation. The figure shows a diagrammatic view of the apparatus.

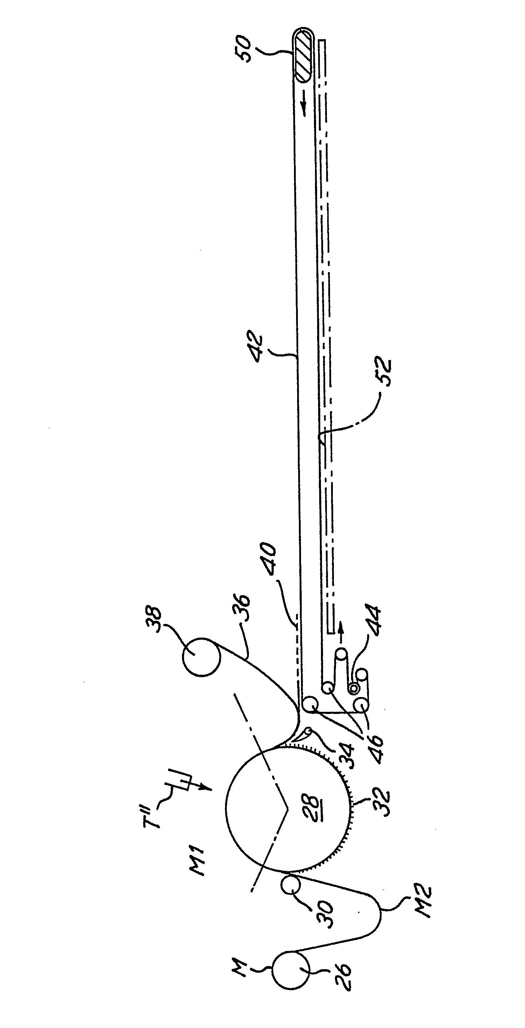

In Figure 1 a roll of fabric material M to be cut is shown mounted in bearings 26. The material forms a loop M2 before resting upon an upwardly facing surface of a rotary drum 28 which is covered with card-clothing 32. An example of card-clothing suitable for the present use is illustrated in U.K. Patent Specification Number 1362200. A roller 30 lightly presses the fabric onto the card clothing surface. At the initial feeding of the fabric M onto the drum, the drum is rotated until the leading edge of the fabric is at or beyond a position shown by a line Q, so that uncut fabric rests on the card clothing in an arc between lines P and Q.

A cutting device T", in the present example, a plasma torch,is energised and cuts the fabric in a predetermined pattern by a contolled 2-axis motion, one axis parallel to the axis of the drum, the other axis perpendicular thereto by rotation around the periphery of the drum in a arcuate movement concentric with the drum and confined to the area between the positions at P and Q.  During this part of the cutting procedure the drum 28 is stationary. A suitable plasma cutting torch is described in U.K. Patent Specification Number 1345031.

It will be appreciated that more than one cutting device may be used, a plurality of such cutting devices operating in tandem for example cutting parallel identical patterning in the fabric.

When all the cutting required is completed on the length of fabric between P and Q, operation of the cutting device will cease at or near the line P, and the cutting device is de-energised.  The drum 28 then rotates through an angle ∅ equal to the angle between lines P and Q so that the ends of any unfinished cuts previously at P are repositioned at Q.

The rotation of the drum is accompanied by a further length of fabric M being unwound from the fabric roller so that a fresh length of uncut fabric is now received on the upper surface of the drum 28 between the positions P and Q.

The cutting device is simultaneously returned to Q and positioned to the coordinate position of an unfinished cut, on the desired start-point of a new cut.

The cut fabric length is lifted from the drum surface 32 by tines of a deflector device 34 which engage with the elements of the card clothing to lift the fabric from the drum surface. Cut-off portions 36 of the length are designed to be incorporated into the fabric layout so that they may be separated out and lifted from cut pieces 40 of the fabric so as to be rolled up on a reel 38.

Simultaneously with the rotation of the drum 28 the conveyor band 42 advances a linear distance equal to the arcuate length on the surface of the drum 28 lying between the positions P and Q.

The tines thus cause the fabric pieces 40 to be deposited upon the band 42, and after the first cycle as described above the cut pieces 40 will occupy the position shown by the dotted line.

The continuous lengths of waste, off-cut material 36 is arranged to be wound-up on the reel 38 by an intermittent drive synchronised with the rotation of drum 28.

The torch T" is now energised to cut the new section of
cloth lying between P and Q continuing the required
pattern and completing all the cuts at Q unfinished from
the cutting of the previous section. The pattern for the
second length is different from the first where the
length is part of a module as explained above, so as to
continue an overall pattern of cutting which may extend
over several lengths as required by the user to optimise
the usage of cloth, that is, to minimise wastage. In
general the efficiency of cloth utilisation increases
with the length of pattern-repeat, up to 12 metres being
a typical length for cutting components for garments.

It will be appreciated that the cycle of cutting
followed by advancing the cloth by rotation of the drum
28 and movement of the band 42 can be repeated a number
of times equal to the nearest lower integer equal to $\ell/R\emptyset$
where $\ell$ is the length of the band 42 between
roller 46 and carrier 50, and R is the radius of the
drum 28 covered with card clothing 32. After this
number of cycles the leading portions of the cut pieces
will be close to the carrier 50 and a set of cut pieces
will have been arranged along the length of upper run of
the band 42. These cut pieces are now to be transferred
to the surface 52 which in the present example is a
table or alternatively maybe a take-off conveyor.

To achieve the transfer of cut pieces the upper run of band 42 is held stationary whilst the carrier 50 is traversed in the direction of arrow X and a floating roller 48 is traversed in the direction Y to take up the slack in the band 42 occasioned by the traverse of bar 50. The cut pieces of fabric will therefore fall from band 42 onto surface 52 in the same pattern of arrangement as previously existed on the band 42. After the transfer is completed the carrier 50 and roller 48 return to their original positions as shown in the drawing and the cutting programme is resumed as described in the preceding paragraphs to produce a second set of cut parts, identical to the first, which are also deposited onto the surface 52 in such a way that piles of cut parts each pile being of parts which are of identical shape and size, are deposited onto the surface 52 without any offcut material which has already been separately collected on roll 38. This overall cycle is repeated until the required number of sets of cut parts is assembled or the feed roll 28 is exhausted.

It will be appreciated that in an alternative mode of operation of the apparatus the drum 28 and conveyor 42 are in continuous slow forward motion whilst programmed cutting is performed with a cutting speed substantially greater than the forward translation speed of the fabric carried by the drum 28 and conveyor 42. Such operation avoids the time lost in indexing forward the fabric between each cutting period but involves greater complexity in programming to ensure that all cuts have been accomplished in any given portion of the fabric length before that portion crosses the line Q.

The carrier 50 provides a smooth curved surface over which the conveyor band 42 slides, and is provided with inclined side cheeks (not shown) to centre the conveyor band. The carrier is provided with means for creating air or gas pressure under the conveyor band to eject the cut pieces from the band as the carrier 50 withdraws to deposit them on the surface 52. In some cases it may be desired to turn the cut pieces upside down which can be accomplished by supplying a partial vacuum under the conveyor band as it passes over and under the carrier 50. Various methods of providing the reduction or increase in air pressure may be used such as for example arrays of fine holes communicating with internal manifolds in the carrier, or a porous surface forming a wall of the manifold.

A suitable material for the conveyor band 42 is Teflon (Registered Trade Mark) coated 'Kevolar' (Registered Trade Mark) cloth in open weave to provide a fine mesh through which air can pass. Preferably the coating is made electrically conductive by, for example, carbon particles in the coating, so as to prevent electrostatic forces developing. The conveyor band 42 as shown in Figure 1 driven by a servo-grip nip-roll assembly 44 with idling rollers 46, one of which is a dynamic tracker bar. It will be appreciated that several methods and arrangements may be used to achieve the function of the take-up roll 48 and the drive and tracking systems.

It will further be appreciated that there are several conventional methods of driving and positioning the cutting device using stepper motors or AC or DC drive motors in conjunction with feedback position control in a servo-system. The input data for the desired cutting profile may be by a sequence co-ordinate points, copying from a manually designed pattern using a separate or built-in optical system, or a Computer Aided Design system.

Various modifications may be made within the scope of the invention as defined by the following claims.

Claims

1. A method of cutting flexible material in sheet form comprising drawing a length of material (M) from a source thereof, causing said length to be laid upon an upwardly facing portion of a support surface (32) of a carrier device (28), said support surface comprising an endless circulatory loop, means to cause relative movement between cutting means (T") arranged generally above said length of material and the surface support so as to enable a cut to be made in the material thereon according to a predetermined pattern, further circulation of the surface being caused to feed the material from the surface in the direction away from the source of the material.

2. A method of cutting flexible material in sheet form comprising the steps drawing a length of material (M) from a source thereof, causing said length to be laid upon an upwardly facing portion of a support surface (32) of a carrier device (28), said support surface comprising an endless loop so that the length passes beneath cutting equipment (T") as hereinbefore defined, the cutting equipment being arranged to partake of movement transversely and longitudinally of the length of material, wherein the carrier device (28) is at least substantially stationary whilst the cutting equipment is energised to cut the length of material in a predetermined pattern and wherein when all desired cuts on the length are completed the cutting equipment ceases operation, the carrier device and cutting equipment are moved substantially simultaneously and synchronously so as to draw a second length of material from the source whilst the first cut length of material is removed from the carrier device, the cutting equipment (T") then resuming operation and a further pattern is cut on the second length of material such that the layout of the cuts is compatible with the layout of cuts in the first length of material, the steps being repeated with successive lengths of material as often as required.

3. A method as claimed in either one of claims 1 and 2, wherein the carrier device is a rotatably mounted drum (28), the continuous loop of the support surface comprising the drum periphery.

4. A method as claimed in any one of the preceding claims wherein the support surface is provided with card-clothing (32).

5. A method as claimed in either one of claims 3 and 4 wherein the longitudinal movement of the cutting device(T") follows the locus of a part-circular arc concentric with the drum axis.

6. Apparatus for carrying out the method according to claim 3, comprising a material feeding source including a roller device (26) rotatable to provide a length or portion of a length of material to a material support surface (32) of the apparatus mounted for movement in a forward or reverse sense in a continuous loop, cutting equipment(T") positioned at a level above the support surface to facilitate a cutting operation upon material and take-off means (42,52) arranged to allow removal of the cut material from the drum surface.

7. Apparatus as claimed in claim 6, wherein the cutting device comprises at least one plasma torch (T").

8. Apparatus as claimed in claim 6, comprising means(38) for separating the waste material from the desired cut material wherein the waste material is removed in one or more continuous lengths.

9. Apparatus as claimed in either one of claims 6 to 8, comprising means for stacking the cut material into piles of identical parts by arranging the cut parts formed by the method described above on the upper surface of a conveyor arrangement such that each time the carrier device (28) moves forward the said conveyor arrangement moves forward synchronously and collects further cut parts until a complete set of cut parts forming a module or "pattern repeat" is assembled on to a band of the conveyor in a single layer.

10. Apparatus as claimed in claim 9, wherein an end return member (50) of the conveyor arrangement, around which the conveyor band passes, travels in a substantially horizontal path and means are provided for drawing the lower run of the belt in a reverse direction simultaneously with the movement of the return member such that the cut parts fall from upper run of the conveyor band on to a second conveyor band or table (52), and wherein after a second and further set of cut parts are then stacked on the conveyor band of the first conveyor arrangement to be deposited on the second band or table respectively so as to build piles, each pile comprising identical cut parts.

11. Apparatus as claimed in claim 10 wherein the return member of first conveyor band is a bar (50) around which the conveyor band (42) slides and the band is perforated or formed of a mesh or net material such that air or gas provided at a pressure greater or less than atmospheric pressure from a source outlet within the return member (50) controls the fall of the cut parts onto the second conveyor.

12. Apparatus as claimed in claim 11 wherein a combined sequence of reduced and increased pressure is caused to deposit selected cut parts in an inverted condition on the second band or table (52).

13. Apparatus as claimed in either one of claims 11 and
12, wherein the return member (50) is provided with one or
more air manifolds communicating with arrays of fine
air-bleed holes or with sections of porous material.